# EUROPÄISCHE PATENTSCHRIFT

(11) **EP 3 309 027 B1**
(45) Veröffentlichungstag und Bekanntmachung des Hinweises auf die Patenterteilung: **02.06.2021**
(21) Anmeldenummer: 17194417.6
(22) Anmeldetag: 02.10.2017
(51) Int. Cl.: B60T 8/40, B60T 8/42

(54) **DRUCKMODULATOR, INSBESONDERE FÜR EIN ABS-SYSTEM, UND HYDRAULISCHE BREMSANLAGE**
PRESSURE MODULATOR, IN PARTICULAR FOR AN ABS SYSTEM, AND HYDRAULIC BRAKE SYSTEM
MODULATEUR DE PRESSION, EN PARTICULIER POUR UN SYSTÈME ABS ET SYSTÈME DE FREINAGE HYDRAULIQUE

(30) Priorität: 14.10.2016 DE 102016119666
(43) Veröffentlichungstag der Anmeldung: 18.04.2018
(73) Patentinhaber: ZF Friedrichshafen AG, 88046 Friedrichshafen (DE); Magnetbau Schramme GmbH & Co. KG, 88693 Deggenhausertal (DE)
(72) Erfinder: Lauhoff, Jakob, 72070 Tübingen (DE); Preetz, Jens, 88696 Owingen (DE); Maier, Roland, 88693 Deggenhausertal (DE); Lutz, Roland, 88662 Überlingen (DE)
(74) Vertreter: Kohler Schmid Möbus Patentanwälte

(56) Entgegenhaltungen:
- EP-A1- 0 209 737
- EP-A1- 0 209 817
- EP-A2- 0 395 225
- DE-A1- 3 644 304
- DE-A1- 4 015 746
- DE-A1- 10 251 851
- DE-A1- 19 720 636
- DE-A1-102013 113 354
- DE-A1-102013 217 254
- DE-A1-102014 100 577
- FR-A1- 2 217 575
- US-A- 3 690 736

## Beschreibung

Die Erfindung betrifft einen Druckmodulator, insbesondere für ein ABS-System, mit einem Gehäuse, das einen Hydraulikeingang und einen damit über eine im Gehäuse verlaufende hydraulische Leitung verbundenen Hydraulikausgang aufweist, wobei ein gegen eine Federkraft eines Federelements zu öffnender Volumenspeicher vorgesehen ist, der bei einer Aktivierung, insbesondere Aktivierung einer Antiblockierfunktion, das Volumen der hydraulischen Leitung vergrößert.

Weiterhin betrifft die Erfindung eine hydraulische Bremsanlage mit einem erfindungsgemäßen Druckmodulator.

Ein solcher Druckmodulator ist beispielsweise aus der DE 10 2014 007 717 B4 bekannt geworden.

Der dort beschriebene Druckmodulator weist einen Linearmotor auf. Dadurch wird der Druckmodulator relativ groß bauend, was nachteilig ist, wenn der Druckmodulator bei einem Zweirad verbaut werden soll.

Aus der Druckschrift DE 40 15 746 A1 ist ein Druckmodulator für eine blockiergeschützte, hydraulische Bremsanlage bekannt.

Weitere Druckmodulatoren sind aus den Druckschriften US 3 690 736 A sowie EP 0 209 817 A1 bekannt.

Ferner offenbart die Druckschrift DE 36 44 304 A1 eine Bremsanlage für ein Radfahrzeug. Die Bremsanlage umfasst einen Druckmodulator, der einen Fluiddruck sowohl um ein bestimmtes Vielfaches verstärken als auch mittels eines Solenoidbetätigungsgliedes herabsetzen kann.

Die Druckschrift DE 102 51 851 A1 beschreibt schließlich eine elektromagnetische Stellvorrichtung mit einem flachen und homogenen Kraft-/Hubdiagramm.

Aufgabe der vorliegenden Erfindung ist es daher, einen Druckmodulator bereitzustellen, der kleiner aufgebaut werden kann.

Gelöst wird diese Aufgabe erfindungsgemäß durch einen Druckmodulator, insbesondere für ein ABS-System, mit einem Gehäuse, das einen Hydraulikeingang und einen damit über eine im Gehäuse verlaufende hydraulische Leitung verbundenen Hydraulikausgang aufweist, wobei ein gegen eine Federkraft eines Federelements zu öffnender Volumenspeicher vorgesehen ist, der bei einer Aktivierung, z. B. Aktivierung einer Antiblockierfunktion, das Volumen der hydraulischen Leitung vergrößert, wobei ein Proportionalmagnet, insbesondere Proportionalhubmagnet, vorgesehen ist, der bei entsprechender Ansteuerung das Öffnen des Volumenspeichers bewirkt, wobei das Gehäuse zumindest bereichsweise ferromagnetisch ausgebildet ist.

Dadurch, dass der Druckmodulator einen Proportionalmagnet aufweist und zumindest bereichsweise das Gehäuse ferromagnetisch, d. h. magnetisch leitend, ausgebildet ist, kann der Druckmodulator besonders klein aufgebaut werden. Ein Proportionalmagnet kann mit geringeren Dimensionen aufgebaut werden als ein Linearmotor. Dadurch, dass ein Teil des Gehäuses ferromagnetisch ausgebildet ist, kann der Teil des Gehäuses verwendet werden, um einen magnetischen Kreis auszubilden. Die Verwendung eines Proportionalmagnets hat im Vergleich zu einem herkömmlichen Hubmagnet den Vorteil, dass genau gesteuert werden kann, wie weit der Volumenspeicher geöffnet werden soll. Dadurch lässt sich auch die Bremskraft, insbesondere die ABS-Funktion, einer Bremsanlage, in der der Druckmodulator verbaut ist, fein dosieren.

Besondere Vorteile ergeben sich, wenn eine Ansteuerung, insbesondere ein Regler, vorgesehen ist, die den Proportionalmagnet in Abhängigkeit von zumindest einem über einen Sensor erfassten Parameter ansteuert. Die Ansteuerung kann dabei außerhalb des Druckmodulators angeordnet sein oder im Druckmodulator angeordnet sein. Der Sensor kann beispielsweise den Druck in der hydraulischen Leitung und/oder im Volumenspeicher erfassen. Alternativ oder zusätzlich kann ein Drehzahlsensor vorgesehen sein.

Das Federelement kann sich zumindest mittelbar an dem Gehäuse und einem Anker des Proportionalmagnets abstützen. Dabei kann das Federelement vorteilhafterweise in dem Anker angeordnet sein. Somit lässt sich eine besonders klein bauende Ausführung des Druckmodulators realisieren.

Durch die erfindungsgemäße Anordnung kann vermieden werden, dass ein Teil der Hydraulikleitung relativ zum Gehäuse des Druckmodulators bewegt werden muss. Dadurch wird die Funktionssicherheit des Druckmodulators erhöht. Außerdem kann die Anzahl dynamischer Abdichtungen verringert werden.

Die hydraulischen Ein- und Ausgänge können über Steckverbinder realisiert werden, um im Servicefall eine einfache und werkzeuglose Montage/Demontage zu ermöglichen.

Weitere Vorteile ergeben sich, wenn sich der Anker an seinem dem Volumenspeicher abgewandten Ende, insbesondere konisch, verjüngt. Vorzugsweise ist das Gehäuse entsprechend des konisch ausgestalteten Endes des Ankers ausgebildet, sodass sich zwischen Anker und Gehäuse, je nach Stellung des Ankers, ein Luftspalt konstanter Breite einstellt. Durch die konische Anordnung ist das Ende des Ankers teilweise durch das Gehäuse umgeben bzw. umschlossen, sodass ein Magnetfeld geschlossen werden kann.

Weiterhin kann vorgesehen sein, dass der Anker an seinem dem Volumenspeicher zugewandten Ende eine Ausnehmung an seinem Umfang und/oder eine Fase aufweist. Hierdurch kann sichergestellt werden, dass der Anker, der sich in der hydraulischen Leitung befindet, von Hydraulikmedium umspült werden kann, sodass Hydraulikmedium vom Hydraulikeingang zum Hydraulikausgang fließen kann.

Gemäß einer besonders bevorzugten Ausführungsform kann vorgesehen sein, dass das Gehäuse eine Innenwand aufweist, die eine Durchgangsöffnung für den Anker aufweist, wobei die Innenwand aus einem ferromagnetischen Material ausgebildet ist. Über diese Innenwand ist es möglich, einen magnetischen Kreis zu schließen.

Weitere Vorteile ergeben sich, wenn ein in den Anker ragender fest mit dem Gehäuse verbundener Steuerkolben vorgesehen ist, an dem sich das Federelement abstützt. Dadurch ergibt sich eine kompakte Ausgestaltung des Druckmodulators. Der Steuerkolben, das Federelement und der Anker können vorzugsweise koaxial zueinander angeordnet sein. Die Länge des Steuerkolbens und des komprimierten Federelements können im Wesentlichen der Länge des Ankers entsprechen.

Der Steuerkolben ist vorzugsweise aus nicht (ferro-)magnetischem Material ausgebildet. Dadurch lässt sich der Steuerkolben in den magnetischen Rückfluss einbinden.

Der Steuerkolben kann als Hohlkörper ausgebildet sein. Dadurch ist es insbesondere möglich, Hydraulikflüssigkeit, die in das Innere des Ankers gelangt, beispielsweise durch eine Schleppleckage im Bereich der dynamischen Dichtung, abzuführen. In diesem Zusammenhang ist es vorteilhaft, wenn der Steuerkolben mit einem verschließbaren Flüssigkeitsablass verbunden ist. Der Flüssigkeitsablass kann beispielsweise an einer Stirnseite des Gehäuses vorgesehen sein.

Weiterhin kann vorgesehen sein, dass der Druckmodulator genau eine dynamische Dichtung aufweist, die vorzugsweise zwischen dem Anker und dem Steuerkolben wirkt. Die Funktionssicherheit kann erhöht werden, wenn wenige dynamische Dichtungen vorgesehen sind. Dabei kann die dynamische Dichtung einen Dichtring umfassen, an den sich in axialer Richtung zumindest an einer Seite ein ferromagnetisches Material anschließt. Vorzugsweise ist beidseits des Dichtrings (in axialer Richtung des Steuerkolbens gesehen) ferromagnetisches Material vorgesehen. Somit kann die dynamische Dichtung als magnetisches Bauteil ausgebildet sein. Das ferromagnetische Material kann mittels einer Pressverbindung im Anker fixiert sein. Das eigentliche Dichtelement, beispielsweise ein O-Ring, kann zwischen dem ferromagnetischen Material eingeschlossen sein. Durch das Vorsehen des ferromagnetischen Materials beidseits der eigentlichen Dichtung kann die magnetische Masse erhöht werden.

In alternativer Ausgestaltung kann die dynamische Dichtung als Spaltdichtung ausgebildet sein oder einen Faltenbalg oder eine Membran aufweisen.

Besondere Vorteile ergeben sich, wenn der Anker von Hydraulikmedium umströmbar in der hydraulischen Leitung angeordnet ist. Als Hydraulikmedium kann insbesondere Glykol-H₂O vorgesehen sein. Dieses Hydraulikmedium weist eine besonders geeignete Viskosität auf. Außerdem ist es unbedenklich hinsichtlich seiner Umweltverträglichkeit.

Der Anker kann im Gehäuse geführt sein. Das Hydraulikmedium kann eine Schmierung des Ankers bewirken, sodass dieser verschleiß- und reibungsarm im Gehäuse bewegbar ist. Insbesondere kann das Hydraulikmedium über das Führungsspiel zwischen dem Anker und einer Führungsbuchse durchgeführt sein.

Weiterhin kann vorgesehen sein, dass der Anker zumindest eine Hydraulikfluidausnehmung, einen polygonförmigen Querschnitt und/oder Abflachungen aufweist, insbesondere an seiner Mantelfläche zumindest eine sich in Längsrichtung des Ankers oder wendelförmig erstreckende Rille aufweist. Somit kann Hydraulikflüssigkeit über die Rille entlang des Ankers fließen. Alternativ oder zusätzlich ist es denkbar, dass der Anker in Längsrichtung des Ankers ausgerichtete Durchgangsöffnungen aufweist, durch die hindurch Hydraulikflüssigkeit vom Hydraulikeingang zum Hydraulikausgang des Druckmodulators fließen kann.

Besondere Vorteile ergeben sich, wenn der Anker reibungsminimierend, insbesondere mit PTFE, beschichtet ist. Dadurch lässt sich der Anker besonders leicht im Gehäuse bewegen.

Die Spule des Proportionalmagnets kann gegen einen Ankerraum über eine Hülse abgedichtet sein. Bei der Hülse kann es sich um die Führungshülse handeln, die den Anker im Gehäuse führt.

Gemäß einer besonders vorteilhaften Ausgestaltung der Erfindung kann vorgesehen sein, dass in der hydraulischen Leitung eine durch den Anker betätigbare Ventilanordnung vorgesehen ist. Insbesondere kann das Ventil durch den Anker geöffnet werden, wenn sich dieser in einer Ausgangsstellung befindet, d. h. durch das Federelement bis zu einem definierten Maximaldruck in eine vorgegebene Stellung gedrückt wird. Dadurch kann der Anker beispielsweise gegen eine, insbesondere federbeaufschlagte, Kugel eines Rückschlagventils drücken und dadurch das Ventil öffnen. Wird dagegen die Antiblockierfunktion aktiviert und der Anker entgegen der Federkraft des Federelements bewegt, wird der Kontakt zwischen dem Anker und der Kugel des Ventils aufgelöst, sodass die Kugel das Ventil verschließt und ein weiteres Nachführen von Hydraulikflüssigkeit durch einen Geberzylinder verhindert wird. Durch eine so ausgeführte Ventilanordnung ist nur ein einziges Ventil im Druckmodulator notwendig. Als Alternative zur Kugel wäre auch ein Bauteil mit darauf angebrachter Dichtung denkbar, welches eine Bohrung zwischen hydraulischem Eingang und dem Anker verschließt.

In dem Gehäuse kann vorzugsweise eine Elektronikschaltung angeordnet sein. Die Elektronikschaltung kann die Ansteuerung, insbesondere einen Regler, umfassen. Dadurch ergibt sich eine besonders platzsparende und geschützte Anordnung. Die Elektronikschaltung und damit die Ansteuerung kann gut geschützt und kostengünstig im Gehäuse des Druckmodulators angeordnet werden. Dadurch sind weniger sicherheitskritische und zeitkritische Signalverbindungen notwendig.

Weitere Vorteile ergeben sich, wenn ein den Druck im Volumenspeicher erfassender im Gehäuse angeordneter Drucksensor vorgesehen ist. Durch diesen Drucksensor kann der Druck im Volumenspeicher erfasst werden und ausgehend davon kann der Druckmodulator und insbesondere eine Bremsanlage gesteuert werden. Insbesondere kann in Abhängigkeit von den Signalen des Drucksensors die Ansteuerung den Proportionalmagnet ansteuern. Der Drucksensor kann vorzugsweise signaltechnisch mit der Ansteuerung verbunden sein.

Der Drucksensor kann auf einer die Elektronikschaltung aufweisenden Platine angeordnet sein. Dabei kann der Drucksensor über eine direkte hydraulische Anbindung mit dem Volumenspeicher verbunden sein. Es ergibt sich dadurch eine kostengünstige, leichte und wenig Platz beanspruchende Anordnung des Drucksensors. Der Drucksensor kann insbesondere in SMD-Bauweise besonders kostengünstig direkt auf der Platine integriert sein.

Die Elektronikschaltung kann axial neben dem Volumenspeicher in einer (separaten) Kammer des Gehäuses angeordnet sein. Somit ist die Elektronikschaltung besonders gut geschützt und kostengünstig angeordnet. Es muss kein separates Gehäuse für die Elektronikschaltung bzw. für die Ansteuerung vorgesehen sein.

Die hydraulische Leitung kann durch die Elektronikschaltung hindurchgeführt sein. Auch denkbar wäre, sowohl hydraulischen Eingang und Ausgang als auch Elektronikschaltung auf einer Seite anzubringen. Dies kann zweckmäßig sein, wenn am Fahrzeug alle Leitungen aus der gleichen Richtung zum Druckmodulator geführt werden. Dies ist z. B. der Fall, wenn der Druckmodulator im Inneren der Karosserie versteckt werden soll. In dem Fall sind dann aber zwei hydraulische Durchführungen durch die Elektronikschaltung erforderlich.

In den Rahmen der Erfindung fällt außerdem eine hydraulische Bremsanlage mit Antiblockierfunktion, umfassend einen den hydraulischen Druck erzeugenden Geberzylinder, der über eine hydraulische Leitung, in der ein erfindungsgemäßer Druckmodulator angeordnet ist, mit einer Radbremse hydraulisch kommunizierend verbunden ist.

Weitere Merkmale und Vorteile der Erfindung ergeben sich aus der nachfolgenden detaillierten Beschreibung eines Ausführungsbeispiels der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung ist ein Ausführungsbeispiel der Erfindung dargestellt und in der nachfolgenden Beschreibung näher erläutert.

Es zeigen:
- Fig. 1: eine schematische Darstellung einer hydraulischen Bremsanlage mit Antiblockierfunktion für ein Zweirad;
- Fig. 2a: einen Druckmodulator in einer perspektivischen Schnittansicht bei nicht aktivierter ABS-Funktion;
- Fig. 2b: ein Detail A der Fig. 2a;
- Fig. 3a: eine der Fig. 2a entsprechende Darstellung bei aktivierter ABS-Funktion;
- Fig. 3b: ein Detail B der Fig. 3a;
- Fig. 4: einen vergrößerten Ausschnitt des Druckmodulators in einer Schnittdarstellung;
- Fig. 5: einen Anker in einer ersten Ausführungsform; und
- Fig. 6: einen Anker in einer zweiten Ausführungsform.

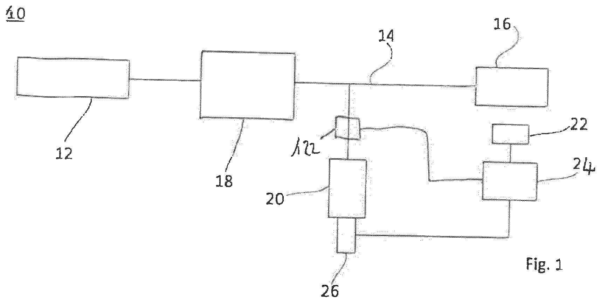

Fig. 1 zeigt eine insgesamt mit dem Bezugszeichen 10 bezeichnete Bremsanlage mit Antiblockierfunktion für ein Elektrofahrrad.

Die hydraulische Bremsanlage 10 umfasst einen, z. B. über einen Bremshebel, betätigbaren Geberzylinder 12, der über eine hydraulische Leitung 14 hydraulisch kommunizierend mit einer Radbremse 16 verbunden ist. Über den Geberzylinder 12 ist in bekannter Art und Weise der für das Ansprechen der Radbremse 16 notwendige hydraulische Druck erzeugbar.

Wie Fig. 1 weiter zeigt, ist stromabwärts vom Geberzylinder 12 eine Ventilanordnung 18 angeordnet. Weiterhin weist die hydraulische Bremsanlage 10 einen gegen eine Federkraft eines Federelements zu öffnenden Volumenspeicher 20, einen Drehzahlsensor 22 sowie eine Ansteuerung 24 auf.

In der schematischen Darstellung gemäß Fig. 1 wurde auf eine Darstellung des Federelements des Volumenspeichers 20 verzichtet. Das Federelement ist vorliegend so dimensioniert, dass die resultierende Federkraft größer als eine durch den Geberzylinder 12 erzeugbare hydraulische Kraft ist.

Wie Fig. 1 weiter zu entnehmen ist, weist die hydraulische Bremsanlage 10 zudem einen über die Ansteuerung 24 ansteuerbaren Proportionalmagnet 26 auf, der wiederum mit dem Federelement des Volumenspeichers 20 in Wirkverbindung steht. Der Proportionalmagnet 26, die Ansteuerung 24 und der Drehzahlsensor 22 sind über entsprechende Kommunikationsleitungen miteinander verbunden. Der Proportionalmagnet 26 steht dabei derart mit dem Federelement des Volumenspeichers 20 in Wirkverbindung, dass eine aktive Rückstellung des Federelements und damit das Öffnen des Volumenspeichers bewirkbar ist.

Nachfolgend zur Funktionsweise der hydraulischen Bremsanlage 10:
Sobald die Ansteuerung 24 mittels des Drehzahlsensors 22 das Blockieren der Räder erkennt, wird der Proportionalmagnet 26 angesteuert, der daraufhin den Volumenspeicher 20 gegen die Federkraft des Federelements öffnet; zeitgleich wird mechanisch oder elektrisch die Ventilanordnung 18 geschlossen.

Somit ist der Geberzylinder 12 von der Radbremse 16 hydraulisch getrennt, d. h. ein Fahrer kann den Druck 10 im Bremssattel nicht weiter erhöhen, da der Griff quasi abgeklemmt ist.

Durch das Öffnen des Volumenspeichers 20 ist das Volumen in der hydraulischen Leitung 14 vergrößert, sodass der hydraulische Druck in der Bremsanlage 10 sinkt.

Mittels der Ansteuerung 24, insbesondere eines Reglers der Ansteuerung 24, kann der Druck in Abhängigkeit beispielsweise von den Signalen eines Drucksensors so lange geregelt werden, bis die Fahrstabilität auch ohne Antiblockierfunktion sichergestellt ist. Anschließend wird der Volumenspeicher 20 geschlossen und die Ventilanordnung 18 wird wieder geöffnet, sodass die Bremsanlage 10 wieder ganz normal arbeitet.

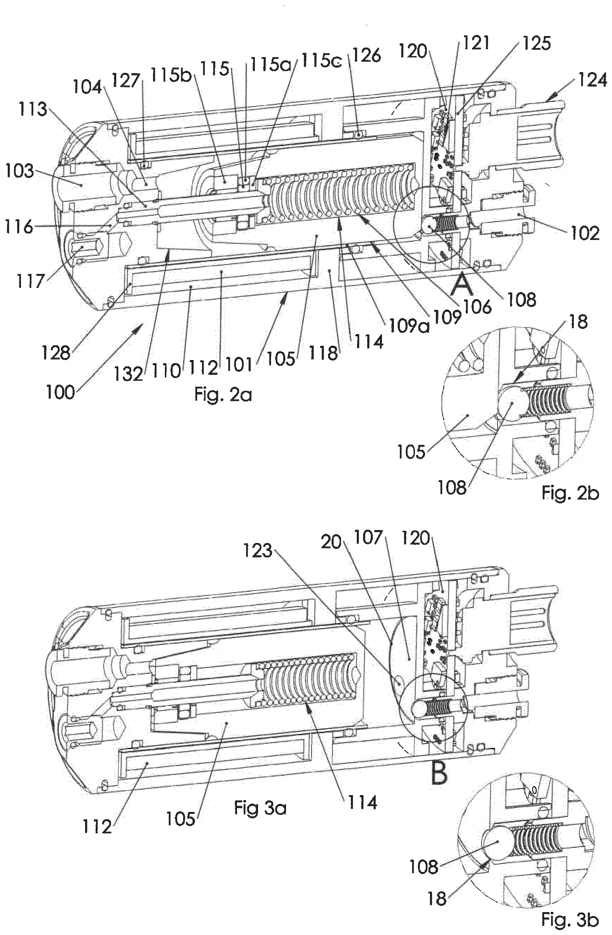

Die Fig. 2a zeigt einen erfindungsgemäßen Druckmodulator 100. Der Druckmodulator 100 umfasst ein Gehäuse 101 mit einem Hydraulikeingang 102 und einem Hydraulikausgang 103. Der Hydraulikeingang 102 und der Hydraulikausgang 103 sind durch eine Hydraulikleitung 104 im Inneren des Gehäuses 101, die Bestandteil der Hydraulikleitung 14 ist, miteinander verbunden.

Die hydraulischen Ein- und Ausgänge 102, 103 können über Steckverbinder realisiert werden, um im Servicefall eine einfache und werkzeuglose Montage/Demontage zu ermöglichen.

Bei nicht aktivierter ABS-Funktion befindet sich ein Anker 105 aus Stahl oder einem Sondermaterial in einer in der Fig. 2a gezeigten Nullstellung. Der Anker 105 ist aufgrund der Federkraft des Federelements 106 nach rechts bewegt, sodass er an einer Gehäusewand 107 (s. Fig. 3a, die die Situation bei aktivierter ABS-Funktion zeigt) anliegt. In dieser Stellung (s. vergrößerte Darstellung gemäß Fig. 2b) drückt der Anker 105 gegen ein als Kugel ausgebildetes Ventilelement 108 der Ventilanordnung 18, sodass die Ventilanordnung 18 geöffnet ist und Hydraulikflüssigkeit die Ventilanordnung 18 durchströmen kann. Die Hydraulikflüssigkeit kann dann weiterhin entlang eines Spalts zwischen der Mantelfläche des Ankers 105 und der Gehäusewand 109 bzw. einer Hülse 109a zum Hydraulikausgang 103 fließen.

Bei aktivierter Antiblockierfunktion wird der Proportionalmagnet 26 aktiviert, der den Anker 105 in die in der Fig. 3a gezeigte Stellung entgegen der Federkraft des Federelements 106 bewegt. Dadurch wird der Volumenspeicher 20 geöffnet. Das Volumen der Hydraulikleitung 104 wird demnach vergrößert, sodass der durch die Hydraulikflüssigkeit auf eine Radbremse ausgeübte Druck geringer wird und die Radbremse geöffnet wird. Das Verschieben des Ankers 105 in die in der Fig. 3a gezeigte Stellung hat weiterhin den Effekt, dass das Ventilelement 108 nach links bewegt wird und somit die Ventilanordnung 18 verschließt, s. Darstellung in der Fig. 3b. Ein Geberzylinder ist somit von der Radbremse abgekoppelt.

Der Proportionalmagnet 26 weist eine zylinderförmige Spulenanordnung 112 auf, durch die der Anker 105 angezogen werden kann. Die Hülse 109a dichtet den Ankerraum bzw. die Hydraulikleitung 104 gegenüber der Spulenanordnung 112 ab.

Das Federelement 106 stützt sich einenends an dem Anker 105 und anderenends an einem nicht magnetischen Steuerkolben 113 ab, der fest mit dem Gehäuse 101 verbunden ist. Das Federelement 106 stützt sich somit mittelbar über den Steuerkolben 113 am Gehäuse 101, das zumindest im Bereich der Spulenanordnung 112 magnetisch leitend, insbesondere ferromagnetisch, ausgebildet ist, ab. Bei einer Verlagerung des Ankers 105 nach links gemäß Fig. 3a wird demnach das Volumen 114 im Bereich des Federelements 106 im Anker 105 verkleinert, die darin befindliche Luft wird komprimiert.

Der Anker 105 ist gegenüber dem Steuerkolben 113 über eine dynamische Dichtung 115 abgedichtet. Die dynamische Dichtung umfasst ein Dichtelement 115a, das auf beiden Seiten von ferromagnetischem Material 115b, 115c begrenzt ist. Das ferromagnetische Material 115b, 115c ist über eine Presspassung im Anker 105 fixiert und hält das Dichtelement 115a in Position.

Gelangt dennoch Hydraulikflüssigkeit aufgrund von Schleppleckage in das Innere des Ankers 105, so kann dies zu einem Ausfall des Systems führen. Um die Flüssigkeit abführen zu können, ist daher der Steuerkolben 113 hohl ausgebildet und steht mit einem verschließbaren Flüssigkeitsauslass 116 in Verbindung. Insbesondere ist der Flüssigkeitsauslass 116 durch eine Schraube 117 verschließbar.

Das Gehäuse 101 weist eine Innenwand 118 mit einer Öffnung auf, durch die der Anker 105 ragt. Die Innenwand 118 ist aus ferromagnetischem Material ausgebildet.

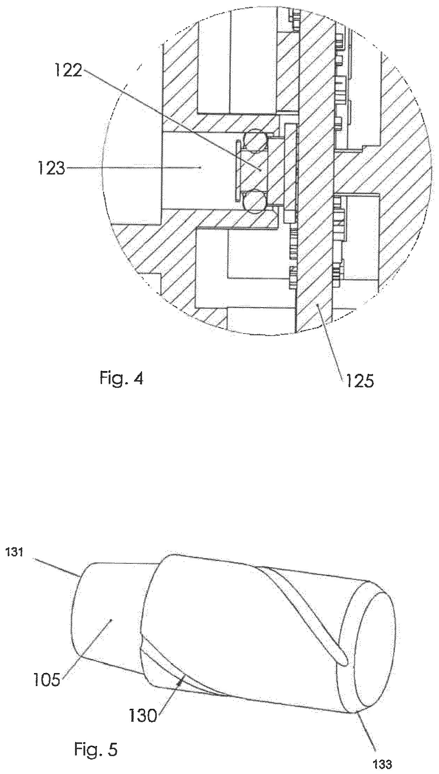

Im Gehäuse 101 ist eine Gehäusekammer 120 vorgesehen, die sich in axialer Richtung unmittelbar an den Volumenspeicher 20 anschließt. In der Gehäusekammer 120 ist eine Elektronikschaltung 121, die die Ansteuerung 24 aufweist, vorgesehen. Diese Elektronikschaltung 121 ist somit vollständig in den Druckmodulator 100 integriert. Sie kann einen Beschleunigungssensor, Mikrocontroller und Leistungsendstufen aufweisen. Weiterhin weist die Elektronikschaltung 121 einen Drucksensor 122 (s. Fig. 4) auf, der direkt hydraulisch an den Volumenspeicher 20 angebunden ist. Zu diesem Zweck weist die Gehäusewandung 107 eine Durchgangsöffnung 123 auf, s. Fig. 3a, 4.

Eine zusätzliche oder zum Drucksensor 122 alternative Positionserfassung des Ankers 105, z. B. mittels Hallsensor, ist denkbar. Auch Signale eines Hallsensors können der Ansteuerung 24 zur Verfügung gestellt werden.

Eine Positionserfassung kann alternativ oder zusätzlich über ein Radarverfahren bzw. eine Radaranordnung mit Sende- und Empfangseinrichtung sowie einer Auswerteschaltung erfolgen. Entsprechende Verfahren und Anordnungen sind in DE 100 64 348 C1, DE 103 34 291 A1 und DE 10 2014 206 521 A1 beschrieben.

Weiterhin ist eine elektrische Anbindung 124 zur Übertragung von Steuersignalen, zur Kommunikation mit einer externen Sensorik, insbesondere dem Drehzahlsensor 22, und eine Stromversorgung, vorgesehen.

Die hydraulische Leitung 104 ist im Bereich der Ventilanordnung 18 durch die Elektronikschaltung 121 hindurchgeführt. Die Elektronikschaltung 121 weist eine Platine 125 auf, auf der auch der Drucksensor 122 angeordnet ist.

Die Elektronikschaltung 121 ist in der Kammer 120 geschützt angeordnet. Ein separates Gehäuse muss nicht vorgesehen werden. Sicherheitskritische und zeitkritische Signale werden somit im Druckmodulator 100 erzeugt und bereitgestellt.

Statische Dichtungen werden durch die O-Ringe 126, 127 realisiert. Ein Kunststoffkörper 128 trägt die Spulenanordnung 112.

Fig. 5 zeigt einen Anker 105 mit auf seiner Mantelfläche ausgebildeten wendelförmigen Rillen 130, die den Durchfluss von Hydraulikflüssigkeit erlauben. Alternativ oder zusätzlich könnten die Rillen 130 auch parallel zur Längsachse des Ankers 105 verlaufen. Die Rillen 130 können in beliebiger Anzahl und Form vorgesehen sein.

Hier ist auch zu erkennen, dass sich der Anker 105 an seinem einen Ende 131 konisch verjüngt. Das Gehäuse 101 ist an der Stelle 132 komplementär ausgebildet, sodass sich zwischen Anker 105 und Gehäuse 101 ein Luftspalt konstanter Breite bildet. An der gegenüberliegenden Seite weist der Anker 105 eine Fase 133 auf.

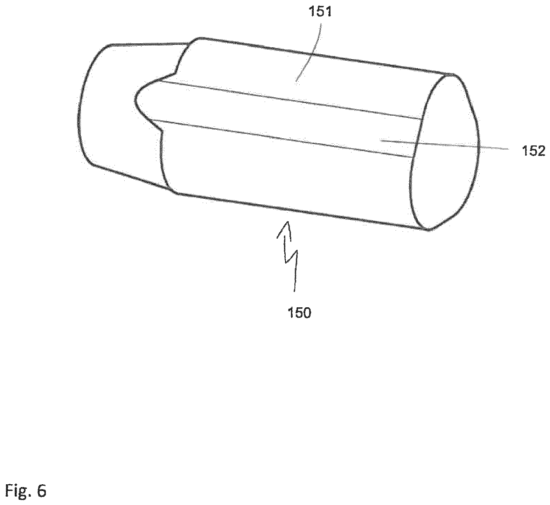

Die Fig.6 zeigt eine alternative Ausgestaltung eines Ankers 150. In diesem Fall weist der Anker einen nicht kreisrunden Querschnitt auf. Insbesondere ist der Querschnitt polygonförmig ausgebildet. Darüber hinaus weist der Anker 150 an seiner Mantelfläche 151 Abflachungen 152 auf. Entlang dieser Abflachungen 152 bildet sich zwischen dem Anker 150 und dem Gehäuse ein Spalt, durch den hindurch Hydraulikflüssigkeit entlang des Ankers 150 fließen kann. Denkbar ist es beispielsweise, dass der Anker einen polygonartigen Querschnitt aufweist, wobei die Kanten des Polygons durch Abflachungen abgeflacht sind, während die Innenkontur des Gehäuses polygonartig mit entsprechenden Ecken ausgebildet ist, sodass Hydraulikflüssigkeit zwischen den Abflachungen und den nicht ausgefüllten Ecken der Innenkontur des Gehäuses schließen kann.

## Patentansprüche

1. Druckmodulator (100), insbesondere für ein ABS-System, mit einem Gehäuse (101), das einen Hydraulikeingang (102) und einen damit über eine im Gehäuse verlaufende hydraulische Leitung (104) verbundenen Hydraulikausgang (103) aufweist, wobei ein gegen eine Federkraft eines Federelements (106) zu öffnender Volumenspeicher (20) vorgesehen ist, der bei einer Aktivierung, z. B. Aktivierung einer Antiblockierfunktion, das Volumen der hydraulischen Leitung (104) vergrößert, **dadurch gekennzeichnet, dass** ein Proportionalmagnet (26), insbesondere Proportionalhubmagnet, vorgesehen ist, der bei entsprechender Ansteuerung das Öffnen des Volumenspeichers (20) bewirkt, wobei das Gehäuse (101) zumindest bereichsweise ferromagnetisch ausgebildet ist.

2. Druckmodulator nach Anspruch 1, **dadurch gekennzeichnet, dass** eine Ansteuerung (24), insbesondere ein Regler, vorgesehen ist, die den Proportionalmagnet (26) in Abhängigkeit von zumindest einem über einen Sensor erfassten Parameter ansteuert.

3. Druckmodulator nach einem der vorhergehenden Ansprüche,
**dadurch gekennzeichnet, dass** sich das Federelement (106) zumindest mittelbar an dem Gehäuse (101) und einem Anker (105) des Proportionalmagnets (26) abstützt.

4. Druckmodulator nach einem der vorhergehenden Ansprüche,
**dadurch gekennzeichnet, dass** sich der Anker (105) an seinem dem Volumenspeicher (20) abgewandten Ende insbesondere konisch verjüngt.

5. Druckmodulator nach einem der vorhergehenden Ansprüche,
**dadurch gekennzeichnet, dass** der Anker (105) an seinem dem Volumenspeicher (20) zugewandten Ende eine Ausnehmung an seinem Umfang und/oder eine Fase (133) aufweist.

6. Druckmodulator nach einem der vorhergehenden Ansprüche,
**dadurch gekennzeichnet, dass** das Gehäuse (101) eine Innenwand aufweist, die eine Durchgangsöffnung für den Anker aufweist, wobei die Innenwand (118) aus einem ferromagnetischen Material ausgebildet ist.

7. Druckmodulator nach einem der vorhergehenden Ansprüche,
**dadurch gekennzeichnet, dass** ein in den Anker (105) ragender fest mit dem Gehäuse verbundener Steuerkolben (113) vorgesehen ist, an dem sich das Federelement (106) abstützt.

8. Druckmodulator nach Anspruch 7, **dadurch gekennzeichnet, dass** der Steuerkolben (113) aus nicht-magnetischem Material ausgebildet ist.

9. Druckmodulator nach einem der vorhergehenden Ansprüche,
**dadurch gekennzeichnet, dass** der Steuerkolben (113) als Hohlkörper ausgebildet ist.

10. Druckmodulator nach einem der vorhergehenden Ansprüche,
**dadurch gekennzeichnet, dass** der Anker (105) von Hydraulikmedium umströmbar in der hydraulischen Leitung (104) angeordnet ist.

11. Druckmodulator nach einem der vorhergehenden Ansprüche,
**dadurch gekennzeichnet, dass** der Anker (105) reibungsminimierend, insbesondere mit PTFE, beschichtet ist.

12. Druckmodulator nach einem der vorhergehenden Ansprüche,
**dadurch gekennzeichnet, dass** eine Spule (112) des Proportionalmagnets (26) gegen einen Ankerraum über eine Hülse (109a) abgedichtet ist.

13. Druckmodulator nach einem der vorhergehenden Ansprüche,
**dadurch gekennzeichnet, dass** in der hydraulischen Leitung (104) eine durch den Anker (115) betätigbare Ventilanordnung (18) vorgesehen ist.

14. Druckmodulator nach einem der vorhergehenden Ansprüche,
**dadurch gekennzeichnet, dass** ein den Druck im Volumenspeicher (20) erfassender Drucksensor (122) vorgesehen ist.

15. Hydraulische Bremsanlage (10) mit Antiblockierfunktion, umfassend einen den hydraulischen Druck erzeugenden Geberzylinder (12), der über eine hydraulische Leitung (14), in der ein Druckmodulator (100) nach einem der vorhergehenden Ansprüche angeordnet ist, mit einer Radbremse (16) hydraulisch kommunizierend verbunden ist.

## Claims

1. Pressure modulator (100), in particular for an ABS system, comprising a housing (101) which has a hydraulic input (102) and a hydraulic output (103) connected to said input by means of a hydraulic line (104) which extends in the housing, a volume accumulator (20) which is to be opened against a spring force of a spring element (106) being provided which, upon activation, e.g. activation of an anti-lock function, increases the volume of the hydraulic line (104), **characterized in that** a proportional magnet (26), in particular a proportional lifting magnet, is provided which, when controlled appropriately, causes the volume accumulator (20) to open, the housing (101) being ferromagnetic at least in regions.

2. Pressure modulator according to claim 1, **characterized in that** a control means (24), in particular a regulator, is provided which controls the proportional magnet (26) depending on at least one parameter detected by means of a sensor.

3. Pressure modulator according to either of the preceding claims, **characterized in that** the spring element (106) is supported at least indirectly on the housing (101) and an armature (105) of the proportional magnet (26).

4. Pressure modulator according to any of the preceding claims, **characterized in that** the armature (105) tapers in particular conically at its end facing away from the volume accumulator (20).

5. Pressure modulator according to any of the preceding claims, **characterized in that** the armature (105) has, at its end facing the volume accumulator (20), a recess on its circumference and/or a bevel (133).

6. Pressure modulator according to any of the preceding claims, **characterized in that** the housing (101) has an interior wall which has a through-opening for the armature, the interior wall (118) being made of a ferromagnetic material.

7. Pressure modulator according to any of the preceding claims, **characterized in that** a control piston (113) projecting into the armature (105) and rigidly connected to the housing is provided, on which piston the spring element (106) is supported.

8. Pressure modulator according to claim 7, **characterized in that** the control piston (113) is made of non-magnetic material.

9. Pressure modulator according to any of the preceding claims, **characterized in that** the control piston (113) is designed as a hollow body.

10. Pressure modulator according to any of the preceding claims, **characterized in that** the armature (105) is arranged in the hydraulic line (104) such that a hydraulic medium can flow therearound.

11. Pressure modulator according to any of the preceding claims, **characterized in that** the armature (105) is coated to minimize friction, in particular with PTFE.

12. Pressure modulator according to any of the preceding claims, **characterized in that** a coil (112) of the proportional magnet (26) is sealed with respect to an armature chamber by means of a sleeve (109a).

13. Pressure modulator according to any of the preceding claims, **characterized in that** a valve arrangement (18) which can be actuated by the armature (115) is provided in the hydraulic line (104).

14. Pressure modulator according to any of the preceding claims, **characterized in that** a pressure sensor (122) which detects the pressure in the volume accumulator (20) is provided.

15. Hydraulic brake system (10) having an anti-lock function, comprising a master cylinder (12) which generates the hydraulic pressure and is connected for hydraulic communication to a wheel brake (16) by means of a hydraulic line (14) in which a pressure modulator (100) according to any of the preceding claims is arranged.

## Revendications

1. Modulateur de pression (100), en particulier destiné à un système ABS, comportant un boîtier (101) qui présente une entrée hydraulique (102) et une sortie hydraulique (103) reliée à celle-ci par l'intermédiaire d'une conduite hydraulique (104) passant dans le boîtier, un accumulateur de volume (20) à ouvrir à l'encontre d'une force de ressort d'un élément de ressort (106) étant prévu, lequel accumulateur de volume, lors de l'activation, par exemple de l'activation d'une fonction antiblocage, augmente le volume de la conduite hydraulique (104), **caractérisé en ce qu'**un aimant proportionnel (26), en particulier un aimant de levage proportionnel, est prévu, lequel, lorsqu'il est commandé de façon correspondante, provoque l'ouverture de l'accumulateur de volume (20), le boîtier (101) étant conçu au moins par zones de façon ferromagnétique.

2. Modulateur de pression selon la revendication 1, **caractérisé en ce qu'**une commande (24), en particulier un régulateur, qui commande l'aimant proportionnel (26) en fonction d'au moins un paramètre détecté par un capteur, est prévu(e).

3. Modulateur de pression selon l'une des revendications précédentes, **caractérisé en ce que** l'élément de ressort (106) vient en appui au moins indirectement contre le boîtier (101) et contre une armature (105) de l'aimant proportionnel (26).

4. Modulateur de pression selon l'une des revendications précédentes, **caractérisé en ce que** l'armature (105) se rétrécit, en particulier de manière conique, au niveau de son extrémité opposée à l'accumulateur de volume (20).

5. Modulateur de pression selon l'une des revendications précédentes, **caractérisé en ce que** l'armature (105) présente, au niveau de son extrémité tournée vers l'accumulateur de volume (20), un évidement sur sa circonférence et/ou un chanfrein (133).

6. Modulateur de pression selon l'une des revendications précédentes, **caractérisé en ce que** le boîtier (101) présente une paroi intérieure qui présente une ouverture de passage destinée à l'armature, la paroi intérieure (118) étant conçue à partir d'un matériau ferromagnétique.

7. Modulateur de pression selon l'une des revendications précédentes, **caractérisé en ce qu'**un piston de commande (113) faisant saillie dans l'armature (105) et solidaire du boîtier est prévu, l'élément de ressort (106) venant en appui contre le piston de commande.

8. Modulateur de pression selon la revendication 7, **caractérisé en ce que** le piston de commande (113) est conçu à partir d'un matériau non magnétique.

9. Modulateur de pression selon l'une des revendications précédentes, **caractérisé en ce que** le piston de commande (113) est conçu sous la forme d'un corps creux.

10. Modulateur de pression selon l'une des revendications précédentes, **caractérisé en ce que** l'armature (105) est disposée dans la conduite hydraulique (104) de manière à ce qu'un milieu hydraulique puisse circuler autour de l'armature.

11. Modulateur de pression selon l'une des revendications précédentes, **caractérisé en ce que** l'armature (105) est revêtue de façon à réduire les frottements au minimum, en particulier avec du PTFE.

12. Modulateur de pression selon l'une des revendications précédentes, **caractérisé en ce qu'**une bobine (112) de l'aimant proportionnel (26) est isolée d'un espace d'armature par l'intermédiaire d'une douille (109a).

13. Modulateur de pression selon l'une des revendications précédentes, **caractérisé en ce qu'**un ensemble soupape (18) pouvant être actionné par l'armature (115) est prévu dans la conduite hydraulique (104).

14. Modulateur de pression selon l'une des revendications précédentes, **caractérisé en ce qu'**un capteur de pression (122) détectant la pression dans l'accumulateur de volume (20) est prévu.

15. Système de freinage hydraulique (10) doté d'une fonction antiblocage, comprenant un maître-cylindre (12) générant la pression hydraulique, lequel est relié par communication hydraulique à un frein de roue (16) par l'intermédiaire d'une conduite hydraulique (14) dans laquelle est disposé un modulateur de pression (100) selon l'une des revendications précédentes.
